# EUROPÄISCHE PATENTANMELDUNG

(11) **EP 4 234 401 A1**
(43) Veröffentlichungstag der Anmeldung: **30.08.2023**
(21) Anmeldenummer: 22159173.8
(22) Anmeldetag: 28.02.2022
(51) Int. Cl.: B64C 31/06, F03D 5/00

(54) **VERFAHREN ZUM LANDEN EINES KITESYSTEMS UND KITESYSTEM**

(71) Anmelder: SkySails Power GmbH, 20357 Hamburg (DE)
(72) Erfinder: Alves, Benjamin, 20537 Hamburg (DE)
(74) Vertreter: Glawe, Delfs, Moll

(57) **Zusammenfassung**

Verfahren zum Landen eines Kitesystems (23), bei dem das Kitesystem (23) einen Kite (14) und eine Gondel (25) umfasst. Der Kite (14) ist über einen Leinenbaum (24) an der Gondel (25) gehalten. Die Gondel (25) ist im Normalbetrieb des Kitesystems (23) über ein Zugseil (15) an einem erdgebundenen Anlenkpunkt (16, 44)) gehalten. Eine Segelfläche des Kites (14) wird durch einen ersten Teilkite (40) und einen zweiten Teilkite (41) aufgespannt. Eine in der Segelfläche liegende Verbindung (36) zwischen dem ersten Teilkite (40) und dem zweiten Teilkite (41) wird getrennt, so dass der Kite (41) in einen anderen aerodynamischen Zustand übergeht und mit der Gondel (25) zu Boden sinkt. Die Erfindung betrifft auch ein Kitesystem.

## Beschreibung

Die Erfindung betrifft ein Verfahren zum Landen eines Kitesystems. Das Kitesystem umfasst einen Kite und eine Gondel, wobei der Kite über einen Leinenbaum an der Gondel gehalten ist. Im Normalbetrieb des Kitesystems ist die Gondel über ein Zugseil an einem erdgebundenen Anlenkpunkt gehalten. Die Erfindung betrifft auch ein Kitesystem.

Der Kite kann durch geeignete Einstellung der aerodynamischen Eigenschaften entlang von Flugbahnen bewegt werden, die im Wesentlichen senkrecht zu dem Zugseil ausgerichtet sind, und auf diese Weise eine Zugkraft auf das Zugseil ausüben.

Für den Betrieb eines solchen Kite sind Sicherheitsmechanismen wünschenswert, mit denen eine Kontrolle über den Kite auch dann noch ausgeübt werden kann, wenn eine Aufrechterhaltung des Normalbetriebs nicht möglich ist. Es könnte beispielsweise sein, dass ein Betriebszustand eintritt, in dem die Steuerung ausfällt und der Kite nicht mehr gezielt angesteuert werden kann. Übt der Kite in diesem Zustand eine hohe Zugkraft auf das Zugseil aus, ist es unter Umständen nicht möglich, das Zugseil einzuholen. Auch durch einen Ausfall der Zugseilwinde kann eine Situation eintreten, in der ein Einholen des Kite unmöglich ist. Für den Fall, dass das Zugseil reißt, ist es aus EP 3 456 630 A1, bekannt, die Bruchstelle mit einer Fangeinrichtung zu überbrücken. Da die Fangeinrichtung eine gewisse Strecke benötigt, um die hohen Kräfte absorbieren zu können, geht ein Teil der im Normalbetrieb nutzbaren Flughöhe verloren.

Der Erfindung liegt die Aufgabe zugrunde, ein Verfahren und ein Kitesystem vorzustellen, so dass das Kitesystems auch nach Verlassen des Normalbetriebs zuverlässig und sicher gelandet werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird eine Segelfläche des Kite durch einen ersten Teilkite und einen zweiten Teilkite aufgespannt. Eine in der Segelfläche liegende Verbindung zwischen dem ersten Teilkite und dem zweiten Teilkite wird getrennt wird, so dass der Kite in einen anderen aerodynamischen Zustand übergeht und mit der Gondel zu Boden sinkt.

Die Erfindung hat erkannt, dass das Trennen einer in der Segelfläche liegenden Verbindung zwischen dem ersten Teilkite und dem zweiten Teilkite einen Weg eröffnet, schnell und zuverlässig den aerodynamischen Zustand des Kite so zu verändern, dass die Zugkraft abnimmt. Nach dem Trennen der Verbindung stellt sich ein aerodynamischer Zustand ein, in dem die von dem Kite ausgeübte Auftriebskraft nicht mehr ausreicht, um das Kitesystem in der Luft zu halten. Der Kite und die damit verbundene Gondel sinken zu Boden, wobei der Kite als Fallschirm wirkt.

Insbesondere kann der Kite in diesem Zustand als Bremsfallschirms wirken, so dass bei hohen Seillasten die Spannenergie im Seil abgebaut wird, ohne dass das Seil eine schockartige Entlastung erfährt. Schockartige Entlastungen sind unerwünscht, weil es zu einem Abspringen des Zugseils von den Umlenkrollen an der Bodenstation kommen kann. Wird das Abspringen des Zugseils vermieden, so kann das Zugseil trotz Auslösung des Notlandesystems weiter eingeholt werden. Vorzugsweise wird das Verfahren so durchgeführt, dass der Kite nach dem Auslösen in einen um die Achse des Zugseils rotierenden Zustand übergeht, sodass der Kite lastarm aber mit gespanntem Zugseil zu Boden sinkt.

Als Segelfläche wird die Fläche des Kite bezeichnet, an der die Luft entlang strömt, wenn der Kite entlang von Flugbahnen bewegt wird. Die Segelfläche kann eine zu der Gondel weisende Innenfläche und eine von der Gondel abgewandte Außenfläche umfassen. Die Innenfläche und die Außenfläche können voneinander beabstandet sein und ein Tragflächenprofil aufspannen. Die Verbindung kann sich in Richtung des Tragflächenprofils erstrecken, so dass vor der Trennung sowohl der erste Teilkite als auch der zweite Teilkite ein vollständiges Tragflächenprofil ausbilden. Die Richtung des Tragflächenprofils wird als Längsrichtung des Kite bezeichnet. In Querrichtung betrachtet kann der erste Teilkite neben dem zweiten Teilkite angeordnet sein.

Ein Anlenkpunkt ist erdgebunden, wenn er durch die Zugkraft des Kites nicht von der Erdoberfläche abgehoben wird. Ein erdgebundener Anlenkpunkt kann fest mit dem Erdboden verbunden sein. Möglich sind beispielsweise auch erdgebundene Anlenkpunkte auf einem Schiff, auf einem schwimmenden Ponton oder auf einem mobilen System an Land.

In der Segelfläche ist im Normalbetrieb des Systems eine Verbindung zwischen dem ersten Teilkite und dem zweiten Teilkite ausgebildet. Die Verbindung kann einen kontinuierlichen Übergang zwischen dem ersten Teilkite und dem zweiten Teilkite bilden. Die Verbindung kann so gestaltet sein, dass die Segelfläche und/oder das Tragflächenprofil im Bereich der Verbindung keine Unterbrechung aufweisen.

Das Verfahren kann so durchgeführt werden, dass der erste Teilkite und der zweite Teilkite vollständig voneinander getrennt werden, so dass es nach der Trennung innerhalb der Segelfläche keine Verbindung mehr zwischen dem ersten und dem zweiten Teilkite gibt. In einer anderen Ausführungsform werden der erste Teilkite und der zweite Teilkite teilweise voneinander getrennt, so dass auch nach der Trennung noch eine in der Segelfläche liegende Verbindung zwischen dem ersten Teilkite und dem zweiten Teilkite besteht.

Der erste Teilkite und der zweite Teilkite können gleich groß sein, so dass die Trennung in der Mitte des Kites erfolgt. Möglich sind auch zwei unterschiedlich große Teilkite, so dass der Kite außermittig getrennt wird.

Der Kite kann mehr als zwei Teilkites umfassen. Jeweils zwei der beteiligten Kites spannen im Sinne der Erfindung eine Segelfläche des Kites auf. Die Teilkite können in Querrichtung des Kites nebeneinander angeordnet sein, so dass ein mittlerer Teilkite jeweils zwischen zwei in Querrichtung angrenzenden Teilkites eingeschlossen ist. Zwischen jeweils zwei benachbarten Teilkites kann eine Verbindung ausgebildet sein, die beim Durchführen des erfindungsgemäßen Verfahrens getrennt wird. Durch Auftrennen in mehr als zwei Teilkites können auch größere Kites zuverlässig zum Landen gebracht werden.

Das Trennen der Teilkites kann durch ein Auslöseelement ausgelöst werden. Das Kitesystem kann so eingerichtet sein, dass das Auslöseelement selbsttätig auslöst, wenn der Normalbetrieb des Kitesystems nicht aufrechterhalten werden kann. Das Auslöseelement kann als Folge eines Ausnahmeereignisses ausgelöst werden. Das Ausnahmeereignis, infolgedessen der Normalbetrieb nicht aufrechterhalten werden kann, kann beispielsweise darin liegen, dass eine Leine des Leinenbaums oder das Zugseil reißt oder dass auf eine Leine des Leinenbaums oder auf das Zugseil eine Überlast wirkt. Das Ausnahmeereignis kann auch darin bestehen, dass in einer Steuereinheit ein Zustand festgestellt wird, in dem ein oder mehrere Betriebsparameter des Kitesystems außerhalb des normalen Bereichs liegen.

Zusätzlich oder alternativ zu einer selbsttätigen Auslösung kann die Möglichkeit vorgesehen sein, dass das Auslöseelement durch einen Eingriff von außen ausgelöst wird. Der Eingriff kann beispielsweise erfolgen, wenn eine Bedienperson beobachtet, dass das Kitesystem in einen irregulären Zustand übergeht. Der Eingriff kann beispielsweise darin bestehen, dass die Bedienperson eine Eingabe macht oder einen Schalter betätigt.

Die Übertragung des Auslösesignals an das Auslöseelement kann auf mechanischem Wege erfolgen. Beispielsweise kann das Auslöseelement mechanisch mit einem Seil gekoppelt sein, so dass das Auslöseelement auslöst, wenn das Seil reißt oder überlastet wird. Das Auslösesignal kann auch ein Steuersignal sein, das auf elektronischem Wege an das Auslöseelement übermittelt wird. Insbesondere kann das Steuersignal kabelgebunden oder über eine Funkverbindung an das Auslöselement übermittelt werden.

Der Kite kann eine Soll-Trennstelle aufweisen, an der die Verbindung zwischen dem ersten Teilkite und dem zweiten Teilkite getrennt wird. Die Soll-Trennstelle kann mit einer Sicherungseinrichtung versehen sein, so dass die Verbindung zwischen dem ersten Teilkite und dem zweiten Teilkite aufrechterhalten bleibt, solange die Sicherungseinrichtung aktiv ist. Die Soll-Trennstelle kann so gestaltet sein, dass die Verbindung zwischen dem ersten Teilkite und dem zweiten Teilkite unter der Einwirkung der auf die Segelfläche wirkenden aerodynamischen Kräfte getrennt wird, wenn die Sicherungseinrichtung nicht mehr aktiv ist.

Die Soll-Trennstelle kann einen Reißverschluss umfassen, durch den der erste Teilkite und der zweite Teilkite miteinander verbunden sind. Der Reißverschluss kann durch die Sicherungseinrichtung im geschlossenen Zustand gehalten werden. Durch Freigabe der Sicherungseinrichtung kann ein Abschnitt des Reißverschlusses gelöst werden, woraufhin sich der Reißverschluss der Länge nach öffnen kann. Das Öffnen des Reißverschlusses kann sich ausgehend von dem gelösten Abschnitt in eine Richtung oder in beiden Richtungen fortsetzen. In einer Ausführungsform ist der Reißverschluss so gestaltet, dass in dem Bereich, in dem die Sicherungseinrichtung angeordnet ist eine Anzahl von Zähnen fehlt oder nicht in Eingriff ist.

In anderen Varianten können die Teilkites an der Soll-Trennstelle mit einem Material verbunden sein, das weniger reißfest ist als das benachbarte Material der Segelfläche, so dass das Material der Soll-Trennstelle nach der Freigabe der Sicherungseinrichtung reißt. Möglich ist auch eine Naht, die sich nach der Freigabe der Sicherungseinrichtung der Länge nach löst. In einer anderen Ausführungsform erstreckt sich eine Zündschnur entlang der Soll-Trennstelle, die mit dem Auslöseelement entzündet wird. Durch die Zündschnur kann das Material des Kite an der Soll-Trennstelle so geschwächt werden, dass es reißt.

Die Soll-Trennstelle kann so gestaltet sein, dass sie nach dem Freigeben der Sicherungseinrichtung unter dem Einfluss der im Normalbetrieb des Kitesystems auftretenden aerodynamischen Kräfte getrennt wird.

Möglich ist auch, dass der Kite zum Trennen der Verbindung in einen Zustand gebracht wird, in dem an der Soll-Trennstelle höhere aerodynamische Kräfte wirken als im Normalbetrieb des Kitesystems. Das Verfahren kann so durchgeführt werden, dass die höheren aerodynamischen Kräfte direkt zu einer Trennung der Soll-Trennstelle führen. Alternativ kann das Trennen der Soll-Trennstelle durch die Freigabe einer Sicherungseinrichtung und die höheren aerodynamischen Kräfte in Kombination bewirkt werden.

Der Leinenbaum zwischen der Gondel und dem Kite kann eine Mehrzahl von Leinen umfassen, über die die Zugkräfte von dem Kite zu der Gondel übertragen werden. Der Leinenbaum kann als aktive Steuerleinen ausgebildete Leinen umfassen, deren freie Länge zwischen der Gondel und dem Kite einstellbar ist. Durch Betätigen der aktiven Steuerleinen kann der Kite so angesteuert werden, dass er sich entlang der gewünschten Flugbahnen bewegt. Der Leinenbaum kann als Festleinen ausgebildete Leinen umfassen, mit denen Abschnitte des Kite in einem festen Abstand zu der Gondel gehalten werden. Der Leinenbaum kann als passive Steuerleinen ausgebildete Leinen umfassen, die sich zwischen einem ersten Anlenkpunkt an dem Kite und einem zweiten Anlenkpunkt an dem Kite erstrecken und die zwischen den Anlenkpunkten an einer mit der Gondel verbundenen Rolle umgelenkt sind. Mit solchen passiven Steuerleinen können sich der Abstand zwischen der Gondel und dem ersten Anlenkpunkt sowie der Abstand zwischen der Gondel und dem zweiten Anlenkpunkt ändern, wobei die Summe der beiden Abstände konstant bleibt. Die Festleinen können in einem bezogen auf die Querrichtung zentralen Abschnitt des Kite angeordnet sein. Die Steuerleinen können in einem peripheren Abschnitt des Kite angeordnet sein. Die passiven Steuerleinen können bezogen auf die Querrichtung in einem Abschnitt des Kite angeordnet sein, der zwischen dem zentralen Abschnitt und dem peripheren Abschnitt liegt.

Das Kitesystem kann so eingerichtet sein, dass mit dem Auslösen des Auslöseelements eine Leine des Leinenbaums durchtrennt wird. Um ein durch das Auslöseelement ausgelöstes Durchtrennen zu ermöglichen, kann die Leine oder ein mit der Leine verbundenes Halteelement beispielsweise mit einem Pyrocutter oder mit einem Druckluft-Schäkel versehen sein. Wirkt keine Zugkraft mehr auf den betreffenden Abschnitt des Kite, so entfernt der Abschnitt sich von der Gondel. Die betreffende Bewegung des Kite kann genutzt werden, um die Sicherungseinrichtung freizugeben. Beispielweise kann sich eine Sicherungsleine von der Gondel über den betreffenden Abschnitt des Kite zu der Sicherungseinrichtung erstrecken, so dass durch die Bewegung in dem Kite eine Zugkraft auf die Sicherungseinrichtung ausgeübt wird. Die Leine, die mit dem Auslöseelement durchtrennt wird, kann eine Festleine sein.

Der Kite kann so gestaltet sein, dass zwischen der Außenfläche und der Innenfläche des Kite ein von einer Außenhaut umgebener Hohlraum eingeschlossen ist. In dem Hohlraum kann im Normalbetrieb des Kitesystems ein Überdruck anliegen, der beispielsweise um 50 mbar bis 1000 mbar, vorzugsweise um 100 mbar bis 500 mbar höher ist als der Umgebungsdruck. Der Überdruck kann durch die Luftströmung gespeist sein, die an der Segelfläche entlang strömt, wenn der Kite sich entlang von Flugbahnen bewegt. Der Kite kann eine Einlassöffnung aufweisen, die zwischen der Außenfläche und der Innenfläche des Kite angeordnet ist. Insbesondere kann die Einlassöffnung in einer Stirnfläche des Kite angeordnet sein, die in Bewegungsrichtung weist.

Mit dem Trennen der Verbindung zwischen dem ersten Teilkite und dem zweiten Teilkite kann eine Öffnung in der Außenhaut des Kite erzeugt werden, durch die ein im Innenraum des Kite anliegender Überdruck entweicht. Das Entweichen des Überdrucks kann den aerodynamischen Zustand des Kite verändern, so dass die in Richtung der Gondel wirkende Zugkraft reduziert wird.

Die Erfindung betrifft außerdem ein Kitesystem mit einem Kite und einer Gondel. Der Kite ist über einen Leinenbaum an der Gondel gehalten. Eine Segelfläche des Kites wird durch einen ersten Teilkite und einen zweiten Teilkite aufgespannt. In der Segelfläche ist eine Verbindung zwischen dem ersten Teilkite und dem zweiten Teilkite ausgebildet. Das Kitesystem umfasst ein Auslöseelement zum Trennen der Verbindung, so dass der Kite nach dem Trennen der Verbindung in einen anderen aerodynamischen Zustand übergeht und mit der Gondel zu Boden sinkt.

Das Kitesystem kann ein Zugseil umfassen, das sich zwischen der Gondel und einem erdgebundenen Anlenkpunkt erstreckt. Der Anlenkpunkt kann ein Bestandteil einer fest mit dem Erdboden verbundenen Komponente des Kitesystems sein. Das Kitesystem kann ein Element einer Vorrichtung zum Erzeugen elektrische Energie sein. Die Vorrichtung kann einen Generator umfassen, der über eine Zugseilwinde angetrieben wird. Möglich ist auch, dass das Kitesystem mit einem Anlenkpunkt eines Schiffs verbunden ist, sodass mit dem Kitesystem eine Antriebskraft für das Schiff erzeugt werden kann. Ein Anlenkpunkt eines Schiffs ist ein erdgebundener Anlenkpunkt im Sinne der Erfindung.

Das Kitesystem kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Kitesystems beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Vorrichtung;
- Fig. 2:: eine schematische Darstellung eines Betriebszustands der Vorrichtung aus Fig. 1;
- Fig. 3:: ein erfindungsgemäßes Kitesystem;
- Fig. 4-6:: Details des Kitesystems aus Fig. 3 in vergrößerter Darstellung;
- Fig. 7-10:: verschiedene Zustände eines erfindungsgemäßen Kitesystems;
- Fig. 11:: eine alternative Ausführungsform einer erfindungsgemäßen Vorrichtung.

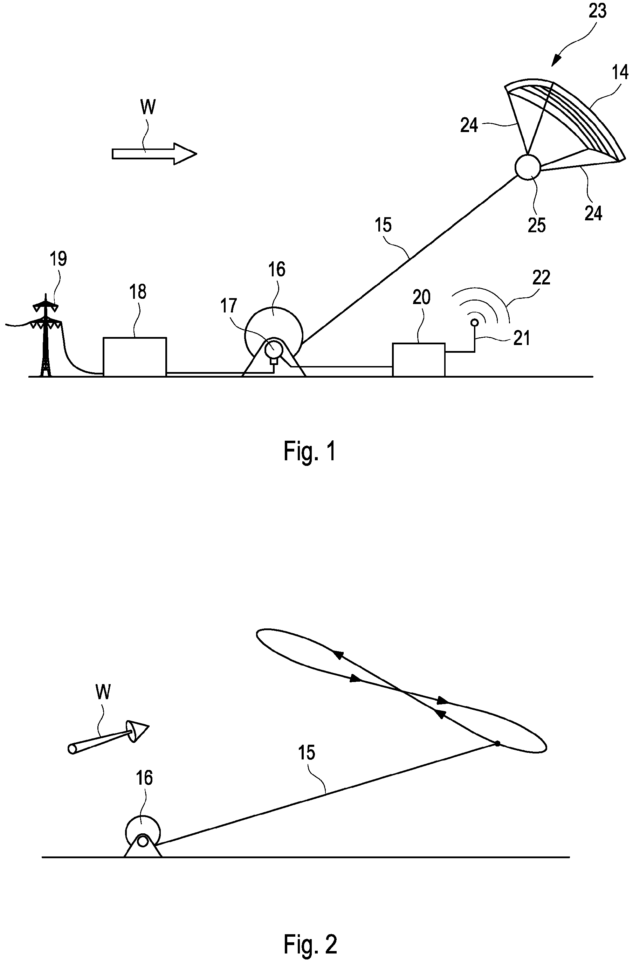

Eine erfindungsgemäße Vorrichtung zum Erzeugen elektrischer Energie umfasst gemäß Fig. 1 ein erfindungsgemäßes Kitesystem 23, das über ein Zugseil 15 an eine Zugseilwinde 16 angeschlossen ist. Das Kitesystem 23 umfasst einen Kite 14, der über einen Leinenbaum 24 an eine Gondel 25 angeschlossen ist.

Mit der Zugseilwinde 16 gekoppelt ist eine elektrische Kraftarbeitsmaschine 17, die in einem ersten Betriebszustand als Generator und in einem zweiten Betriebszustand als Motor arbeitet. Die Kraftarbeitsmaschine ist über einen elektrischen Leistungsstrang 18, der einen Umrichter und einen Transformator umfasst, an ein öffentliches Übertragungsnetz 19 angeschlossen, so dass entweder mit der Kraftarbeitsmaschine 17 erzeugte elektrische Energie in das Übertragungsnetz 19 eingespeist werden kann oder die Kraftarbeitsmaschine 17 mit aus dem Übertragungsnetz 19 entnommener elektrische Energie als Motor betrieben werden kann. Die Vorrichtung umfasst eine Steuereinheit 20, die dazu ausgelegt ist, das Zusammenspiel der Komponenten der Vorrichtung zu steuern.

Die Steuereinheit 20 umfasst eine Antenne 21, so dass über eine Funkverbindung 22 Steuersignale mit der Gondel 25 ausgetauscht werden können. Insbesondere werden von der Steuereinheit 20 Steuersignale an die Gondel 25 gesendet, um die Flugbahn des Kite 14 zu steuern. Unter Nutzung der Steuersignale wird die Länge von Steuerleinen des Leinenbaums 24 verändert, wodurch Einfluss auf die Flugrichtung des Kite 14 genommen wird.

In dem Ausführungsbeispiel gemäß Fig. 2 wird der Kite 14 entlang einer im Wesentlichen quer zur Windrichtung W ausgerichteten liegenden Acht geführt. Während der Kite 14 der Flugbahn folgt, wird eine Zugkraft auf das Zugseil 15 ausgeübt, mit der über die Zugseilwinde 16 die Kraftarbeitsmaschine 17 angetrieben wird. Mit der in diesem Betriebszustand als Generator betriebenen Kraftarbeitsmaschine 17 wird die mechanische Energie in elektrische Energie umgewandelt und über den Leistungsstrang 18 in das öffentliche Übertragungsnetz 19 eingespeist. Möglich ist auch, einen Teil der erzeugten Energie in elektrischer Form in einem Energiespeicher des Leistungsstrangs 18 zu speichern. Auf diese Weise kann elektrische Energie erzeugt werden, bis die Länge des Zugseils 15 ausgeschöpft ist und das Zugseil 15 vollständig von der Zugseilwinde 16 ausgefiert ist. Anschließend wird das Zugseil 15 mit der als Motor betriebenen Kraftarbeitsmaschine 17 eingeholt, bevor erneut elektrische Energie erzeugt werden kann.

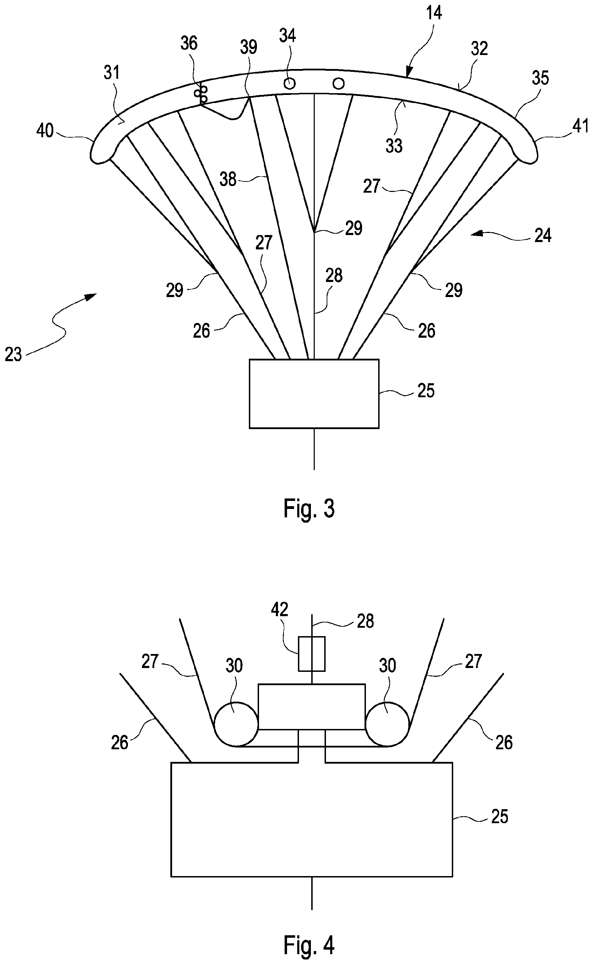

Der Leinenbaum 24 des erfindungsgemäßen Kitesystem 23 umfasst gemäß Fig. 3 aktive Steuerleinen 26, passive Steuerleinen 27 und Festleinen 28, die jeweils an der Gondel 25 angeschlagen sind und die sich ausgehend von Knotenpunkten 29 in eine Mehrzahl von an dem Kite 14 angeschlagene Enden verzweigen. Die Festleinen 28 erstrecken sich von einem in fester Verbindung mit der Gondel 25 stehenden Ende bis zu einem zentralen Abschnitt des Kite 14. Die aktiven Steuerleinen 26, deren Länge einstellbar ist, erstrecken sich von der Gondel 25 bis zu zwei peripheren Abschnitten des Kite 14. Die passiven Steuerleinen 27, die an der Gondel 25 über Rollen 30 umgelenkt sind, sind zwischen den Festleinen 28 und den aktiven Steuerleinen 26 an dem Kite 14 befestigt.

Durch Einstellen der Länge der aktiven Steuerleinen 26 kann die Bewegungsrichtung des Kite 14 gesteuert werden. Beim Einstellen der aktiven Steuerleinen 26 werden die passiven Steuerleinen 27 über die Rollen 30 mitgeführt, wobei die Länge der passiven Steuerleinen 27 vom Kite 14 über die Rollen 30 zurück zum Kite 14 unverändert bleibt.

Der Kite 14 bildet ein Tragflächenprofil, das sich in Längsrichtung ausgehend von einer in Fig. 3 sichtbaren Stirnfläche 31 über eine Außenfläche 32 und eine Innenfläche 33 bis zu einem in Fig. 3 nicht sichtbaren hinteren Ende erstreckt. Im Inneren des Kite 14 ist ein Hohlraum ausgebildet, der im Normalbetrieb des Kitesystems unter Überdruck steht. Der Kite 14 umfasst in der Stirnfläche 31 ausgebildete Öffnungen 34, durch die Luft in den Innenraum eintreten kann und durch die der Überdruck aufgebaut wird, wenn der Kite 14 in Bewegung ist.

In der Außenhaut 35 des Kite 14 ist ein Reißverschluss 36 ausgebildet, der sich ausgehend von der Stirnfläche 31 sowohl über die Außenfläche 32 als auch über die Innenfläche 33 über die Länge des Tragflächenprofils bis zum hinteren Ende des Kite 14 erstreckt. Im Normalbetrieb des Kitesystems ist der Reißverschluss 36 geschlossen. Durch Öffnen des Reißverschlusses 36 kann der Kite 14 in einen ersten Teilkite 40 und einen zweiten Teilkite 41 getrennt werden. Im Sinne der Erfindung verbindet der Reißverschluss 36 den ersten Teilkite 40 und den zweiten Teilkite 41 und bildet eine Soll-Trennstelle zwischen dem ersten Teilkite 40 und dem zweiten Teilkite 41.

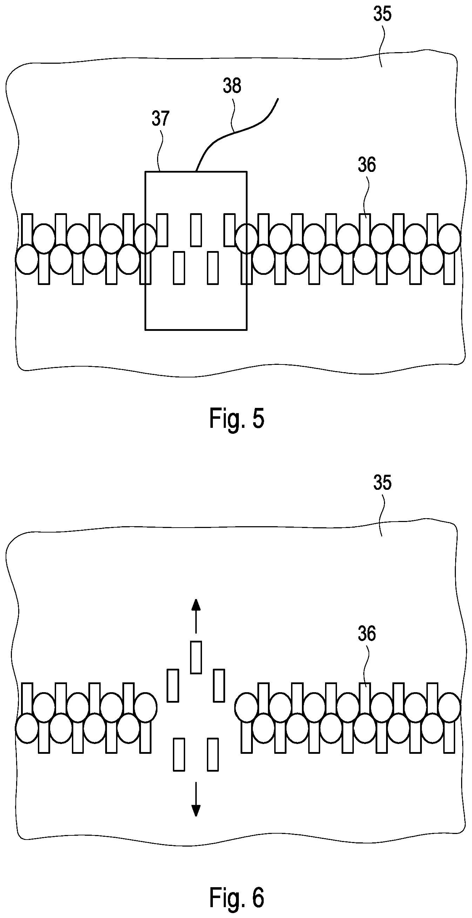

Der Reißverschluss 36 umfasst gemäß Fig. 5 einen Abschnitt, in dem eine Mehrzahl von Zähnen entfernt ist und der mit einer Sicherungseinrichtung 37 gesichert ist. Die Sicherungseinrichtung 37 erstreckt sich über den Reißverschluss 36 hinweg und hält diesen trotz der fehlenden Zähne in geschlossenem Zustand. Durch Ziehen an einer Auslöseleine 38 kann die Sicherungseinrichtung 37 entfernt werden, was zur Folge hat, dass der Reißverschluss 36 durch quer zum Reißverschluss 36 wirkende Kräfte der Länge nach gelöst werden kann. In Fig. 6 ist ein Zustand des Reißverschlusses 36 kurz nach dem Entfernen der Sicherungseinrichtung 37 gezeigt, in dem der Reißverschluss 36 beginnt, sich zu öffnen. Durch weiteren Zug in Querrichtung kann der Reißverschluss 36 über seine gesamte Länge geöffnet werden, wodurch der erste Teilkite 41 und der zweite Teilkite 41 voneinander getrennt werden.

Die Auslöseleine 38 erstreckt sich gemäß Fig. 3 von der Gondel 25 über einen an dem Kite 14 ausgebildeten Anlenkpunkt 39 bis zu der Sicherungseinrichtung 37. Wird die Festleine 28 gelöst, so entfernt der Zentralabschnitt des Kite 14 sich von der Gondel 25, so dass die Auslöseleine 38 unter Spannung gesetzt wird, wodurch die Sicherungseinrichtung 37 freigegeben wird. Dies hat zur Folge, dass der Reißverschluss 36 sich der Länge nach öffnet, so dass der Kite 14 sich in den ersten Teilkite 40 und den zweiten Teilkite 41 trennt. Mit dem Öffnen des Reißverschlusses 36 entsteht eine Öffnung in der Außenhaut 35 des Kite 14, durch die der Überdruck entweicht. Der erste Teilkite 40 und der zweite Teilkite 41 wirken in diesem Zustand jeweils als Fallschirm, an denen die Gondel 25 zu Boden sinkt.

Gemäß Fig. 4 ist in einem zu der Gondel 25 benachbarten Abschnitt der Festleine 28 ein Pyrocutter 42 angeordnet. Der Pyrocutter 42 kann durch ein elektrisches Signal ausgelöst werden, wodurch die Festleine 28 durchtrennt wird. Der Pyrocutter 42 bildet ein Auslöseelement im Sinne der Erfindung. Das elektrische Signal zum Auslösen des Pyrocutters 42 kann von der Steuereinheit 20 gegeben werden und erzeugt werden, wenn ein Ausnahmeereignis eintritt, aufgrund dessen das Kitesystem nicht weiter im Normalbetrieb betrieben werden kann.

Nach dem Durchtrennen der Festleine 28 steigt der zentrale Abschnitt des Kite 14 an und entfernt sich damit von der Gondel 25, wodurch die Auslöseleine 38 unter Zug gesetzt wird. Die Sicherungseinrichtung 37 wird entfernt und der Reißverschluss 36 geöffnet, so dass die Gondel mit den beiden als Fallschirm wirkenden Teilkite 40, 41 zu Boden sinkt.

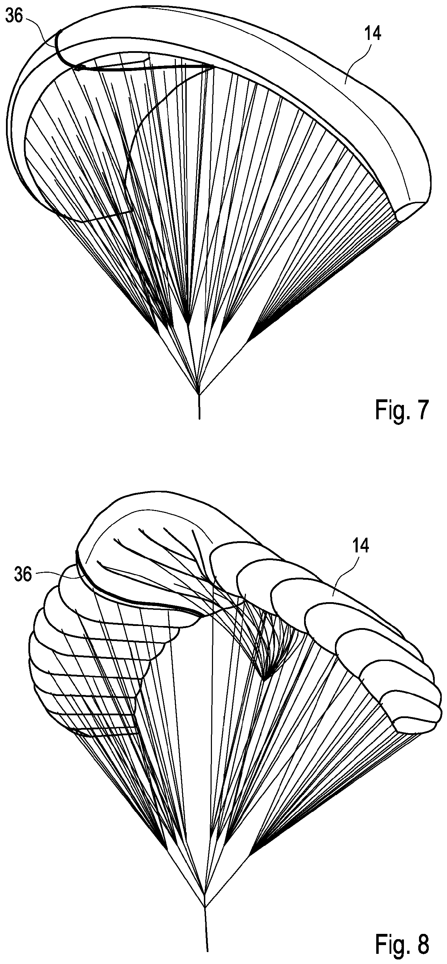

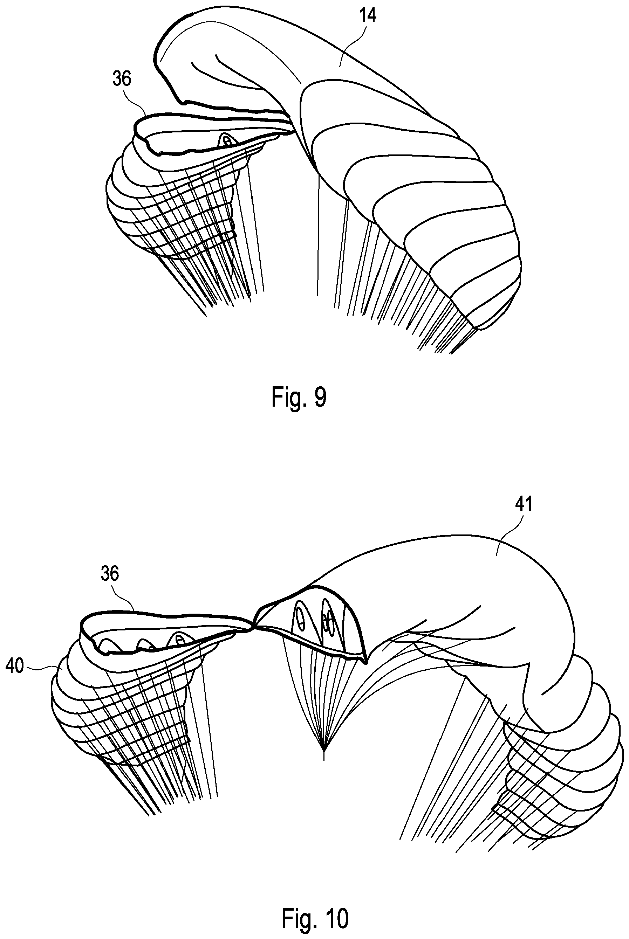

Der betreffende Ablauf ist in den Fig. 7-10 dargestellt. In Fig. 7 ist das Kitesystem 23 im Normalbetrieb gezeigt. In Fig. 8 wurde die Festleine 28 durchtrennt, so dass der zentrale Abschnitt des Kite 14 ansteigt und die Sicherungseinrichtung 37 von dem Reißverschluss 36 gelöst wird. In Fig. 9 ist der Reißverschluss 36 teilweise gelöst. Nach dem vollständigen Lösen des Reißverschlusses 36 sind die beiden Teilkites 40, 41 voneinander getrennt. Mit dem Entweichen des Überdrucks aus dem Innenraum verlieren die Teilkites 40, 41 ihr aerodynamisches Profil und wirken nur noch als Fallschirm.

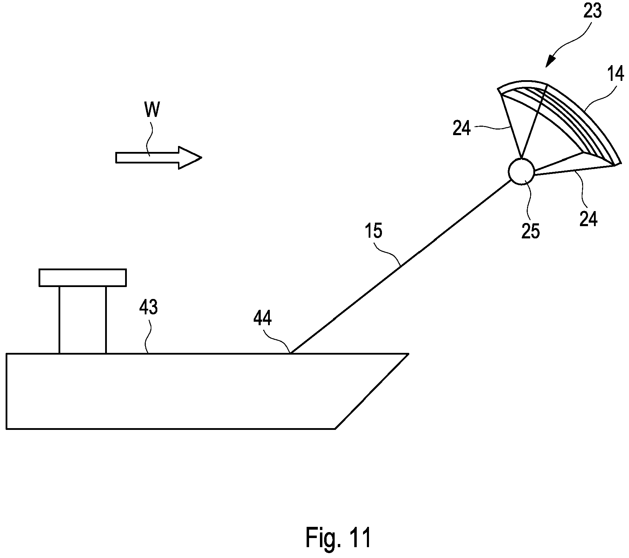

In Fig. 11 ist eine alternative Ausführungsform der Erfindung gezeigt, bei der das erfindungsgemäße Kitesystem 23 genutzt wird, um eine Antriebskraft für ein Schiff 43 zu erzeugen.

## Patentansprüche

1. Verfahren zum Landen eines Kitesystems (23), wobei das Kitesystem (23) einen Kite (14) und eine Gondel (25) umfasst, wobei der Kite (14) über einen Leinenbaum (24) an der Gondel (25) gehalten ist, und wobei die Gondel (25) im Normalbetrieb des Kitesystems (23) über ein Zugseil (15) an einem erdgebundenen Anlenkpunkt (16, 44)) gehalten ist, wobei eine Segelfläche des Kites (14) durch einen ersten Teilkite (40) und einen zweiten Teilkite (41) aufgespannt wird und wobei eine in der Segelfläche liegende Verbindung (36) zwischen dem ersten Teilkite (40) und dem zweiten Teilkite (41) getrennt wird, so dass der Kite (41) in einen anderen aerodynamischen Zustand übergeht und mit der Gondel (25) zu Boden sinkt.

2. Verfahren nach Anspruch 1, **dadurch gekennzeichnet, dass** die Segelfläche eine zu der Gondel weisende Innenfläche (33) und eine von der Gondel abgewandte Außenfläche (32) umfasst, wobei die Innenfläche (33) und die Außenfläche (32) voneinander beabstandet sind und ein Tragflächenprofil aufspannen.

3. Verfahren nach Anspruch 1 oder 2, **dadurch gekennzeichnet, dass** der erste Teilkite (40) und der zweite Teilkite (41) vollständig voneinander getrennt werden, so dass es nach der Trennung innerhalb der Segelfläche keine Verbindung mehr zwischen dem ersten Teilkite (40) und dem zweiten Teilkite (41) gibt.

4. Verfahren nach einem der Ansprüche 1 bis 3, **dadurch gekennzeichnet, dass** das Trennen der Verbindung (36) durch ein Auslöseelement (42) ausgelöst wird.

5. Verfahren nach Anspruch 4, **dadurch gekennzeichnet, dass** das Auslöseelement (42) mit einem Steuersignal von einer Steuereinheit (20) ausgelöst wird.

6. Verfahren nach einem der Ansprüche 1 bis 5, **dadurch gekennzeichnet, dass** der Kite (14) eine Soll-Trennstelle (36) aufweist, die die Verbindung zwischen dem ersten Teilkite (40) und dem zweiten Teilkite (41) bildet.

7. Verfahren nach Anspruch 6, **dadurch gekennzeichnet, dass** die Soll-Trennstelle einen Reißverschluss (36) umfasst, durch den der erste Teilkite (40) und der zweite Teilkite (41) im Normalbetrieb des Kitesystems (23) miteinander verbunden sind.

8. Verfahren nach Anspruch 6 oder 7, **dadurch gekennzeichnet, dass** die Soll-Trennstelle (36) im Normalbetrieb des Kitesystems (23) mit einer Sicherungseinrichtung (37) gesichert ist.

9. Verfahren nach einem der Ansprüche 6 bis 8, **dadurch gekennzeichnet, dass** der Reißverschluss (36) so gestaltet ist, dass in dem Bereich, in dem die Sicherungseinrichtung (37) angeordnet ist, eine Anzahl von Zähnen fehlt oder nicht in Eingriff ist.

10. Verfahren nach einem der Ansprüche 4 bis 9, **dadurch gekennzeichnet, dass** der Kite (14) nach dem Auslösen des Auslöseelements (42) in einen aerodynamischen Zustand übergeht, in dem die über die Verbindung (36) hinweg wirkenden Kräfte höher sind als im Normalbetrieb des Kitesystems (23).

11. Verfahren nach einem der Ansprüche 4 bis 10, **dadurch gekennzeichnet, dass** mit dem Auslösen des Auslöseelements (42) eine Leine (26, 27, 28) des Leinenbaums (24) durchtrennt wird.

12. Verfahren nach einem der Ansprüche 1 bis 11, **dadurch gekennzeichnet, dass** mit dem Trennen der Verbindung (36) zwischen dem ersten Teilkite (40) und dem zweiten Teilkite (41) eine Öffnung in einer Außenhaut (35) des Kite (14) erzeugt wird, durch die ein im Innenraum des Kite (14) anliegender Überdruck entweicht.

13. Kitesystem (23), umfassend einen Kite (14) und eine Gondel (25), wobei der Kite (14) über einen Leinenbaum (24) an der Gondel (25) gehalten ist, wobei eine Segelfläche des Kites (14) durch einen ersten Teilkite (40) und einen zweiten Teilkite (41) aufgespannt wird, und wobei in der Segelfläche eine Verbindung (36) zwischen dem ersten Teilkite (40) und dem zweiten Teilkite (41) ausgebildet ist, weiter umfassend ein Auslöseelement (42) zum Trennen der Verbindung (36), so dass der Kite (41) nach dem Trennen der Verbindung (36) in einen anderen aerodynamischen Zustand übergeht und mit der Gondel (25) zu Boden sinkt.

14. Kitesystem nach Anspruch 12, **dadurch gekennzeichnet, dass** die Gondel (25) im Normalbetrieb des Kitesystems (23) über ein Zugseil (15) an einem erdgebundenen Anlenkpunkt (16, 44)) gehalten ist.
